# EUROPÄISCHE PATENTSCHRIFT

(11) **EP 0 928 228 B1**
(45) Veröffentlichungstag und Bekanntmachung des Hinweises auf die Patenterteilung: **10.07.2002**
(21) Anmeldenummer: 98931982.7
(22) Anmeldetag: 23.04.1998
(51) Int. Cl.: B09C 1/02, B09C 1/08, C02F 11/00

(54) **VERFAHREN ZUM REINIGEN KONTAMINIERTER BÖDEN**
METHOD FOR DECONTAMINATING CONTAMINATED SOILS
PROCEDE DE NETTOYAGE DE SOLS CONTAMINES

(30) Priorität: 29.04.1997 DE 19719034
(43) Veröffentlichungstag der Anmeldung: 14.07.1999
(73) Patentinhaber: GKSS-FORSCHUNGSZENTRUM GEESTHACHT GMBH, 21502 Geesthacht (DE)
(72) Erfinder: KUPCZIK, Günter, D-22559 Hamburg (DE); SCHULZE-ERFURT, Werner, D-21502 Geesthacht (DE); LUTHER, Günter, D-21502 Geesthacht (DE)
(74) Vertreter: Niedmers, Ole, Dipl.-Phys.
(86) Internationale Anmeldenummer: DE9801132
(87) Internationale Veröffentlichungsnummer: WO9848955

(56) Entgegenhaltungen:
- EP-A- 0 325 159
- EP-A- 0 513 445
- CH-A- 637 034
- DE-A- 3 728 201
- US-A- 5 198 122
- US-A- 5 519 670

## Beschreibung

Die Erfindung betrifft ein Verfahren zum Reinigen kontaminierter Böden, Sedimenten, Schlick, Schlämmen und dergleichen, die wenigstens eine Sandfraktion und eine Feinkornfraktion umfassen, wobei die Feinkornfraktion einen partikelförmigen organischen Schluffanteil enthält, an dem insbesondere Kontaminanten aus Schwermetallen und organischen Verbindungen haften, und einen mineralischen Schluffanteil enthält, und wobei der kontaminierte Schluffanteil vom mineralischen Schluffanteil getrennt werden soll.

Aus der US-A-5 198 122 ist ein Verfahren bekannt, bei dem eine Substanz unter Verwendung von Ultraschallenergie zur Detoxifikation der Substanz behandelt wird. Der Substanz wird Natriumborhydrid hinzugegeben, so daß sich ein Gemisch bildet. Das Natriumhydroxid dient als Katalysator für die Umwandlung organischer Halogenide in weniger gefährliche Substanzen. Die Ultraschallbestrahlung des Gemisches soll im Gemisch eine Kavitation hervorrufen. Die Zugabe des katalysierend wirkenden Natriumhydroxids und die Behandlung des entstehenden Gemisches aus der Substanz und Natriumhydroxid mit Ultraschall erfolgt nacheinander.

Kontaminierter Boden von Altlastenstandorten, verunreinigte Sedimente bzw. Schlick aus Fließ- und Stillgewässern und Schlämme aus Kläranlagen fallen weltweit in großen Mengen an. In Deutschland existieren mehr als 200.000 Altlastenverdachtsflächen, wobei in den Altbundesländern jährlich 50.000.000 bis 60.000.000 m³ Baggergut und ca. 50.000.000 m³ Klärschlamm anfallen.

Eine vollständige Deponierung dieser Massen ist nicht möglich. Eine weitgehende Verwertung durch neue, umweltschonende bzw. umweltneutrale Verfahren ist ein zwingendes Gebot, um diese anfallenden Massen im vorbeschriebenen Sinne zu beherrschen. Grundsätzlich wäre ein erster Schritt zur Beherrschung dadurch getan, daß wirtschaftliche Verfahren zur Verfügung gestellt werden, mit denen eine Minimierung der verunreinigten Masse angestrebt wird. Ein zweiter Schritt zur Beherrschung dieser Masse wäre die Bereitstellung von Verfahren zur Reinigung bzw. Verwertung der verunreinigten Restmengen aus dem ersten voraufgeführten Schritt. Kann jedoch die Restmengenverwertung nicht wirtschaftlich durchgeführt werden, muß diese deponiert werden. Deponien von heute sind jedoch die Altlasten von morgen.

Auch bisher wurden schon verunreinigte Böden, Sedimente, Schlick und Schlämme mit Hilfe einfacher hydraulischer Verfahren in eine Sandfraktion und eine Feinkornfraktion (< 63 µm) aufgetrennt. Die Feinkornfraktion besteht aus dem mineralischen Schluffanteil (2 µm bis ≤63 µm) und dem Tonanteil (<2 µm), organischen Bestandteilen und den anhaftenden organischen und anorganischen Kontaminatoren, beispielsweise Schwermetallen bzw. Schwermetallverbindungen. Die Sandfraktion ist weitgehend schadstofffrei und kann im allgemeinen einer Nutzung zugeführt werden. Da wirtschaftliche Aufbereitungsverfahren, trotz vieler Versuche und Vorschläge, fehlen, wird bisher der kontaminierte Schluffanteil als Abfall deponiert.

Kontaminierte Schluffe sind beispielsweise enthalten in anthropogen belasteten Böden, im Sediment bzw. Schlick von FlieB- und Stillgewässern (Baggergut) sowie im Abfall aus Industrie (Schlämme), Wirtschaft und Haushaltungen.

Bei der Untersuchung kontaminierter Flußsedimente wurde festgestellt, daß die Kontaminanten weitgehend in Feinkornanteilen aufkonzentriert sind. Viele vorgeschlagene Reinigungsverfahren, siehe oben, sind nicht anwendbar, wenn der Schluffanteil im zu reinigenden Boden eine bestimmte Grenze, beispielsweise 30 %, überschreitet. Es ist zu berücksichtigen, daß z.B. die linearen Verteilungskoeffizienten zwischen Sediment und umgebendem Wasser für Hexachlorbenzol (HCB) zwischen 2.000 und 3.000 liegen. Wird der Verteilungskoeffizient zwischen dem Kohlenstoffanteil im Sediment und dem Wasser ermittelt, ergeben sich sogar Verteilungskoeffizienten von ca. 50.000. Hexachlorbenzol hat, genau wie nahezu alle organischen Kontaminanten, somit eine große Affinität zum Sediment und extrem hohe Affinität zum anhaftenden Kohlenstoffanteil. Untersuchungen für den Schwermetallbereich zeigen, daß auch der größte Teil der eingebrachten Schwermetalle bevorzugt mit dem organischen Anteil verbunden sind.

Es ist bisher lediglich bekannt geworden, in synthetischen Öl-Wasseremulsionen enthaltene polyzyklische aromatische Kohlenwasserstoffe unter Nutzung eines Sprühreaktors zu oxidieren und damit oxidativ abzubauen. Der Nachteil eines Oxidationmittels Ozon oder anderer Oxidationsmittel ist, daß diese jedoch sehr lange Reaktionszeiten und einen sehr großen apparativen Aufbau benötigt. Es ist auch versucht worden, chlorierte Lösungsmittel aus Wasser durch Verdampfung im Kavitationsgebiet zu entfernen, d.h. eine chemische Stoffumwandlung im Wasser unter Kavitationsbedingungen. Eine alleinige Beeinflussung eines Gemisches bzw. einer Suspension mittels Kavitation hat lediglich begrenzte Wirkung zur Folge, da der Wirkungsgrad der Umsetzung bzw. der Freisetzung der darin enthaltenen Schadstoffe begrenzt ist und auf dem Weg bis zu einer anschließenden Trennanlage eine Readsorption der zu trennenden Bestandteile des Gemisches bzw. der Suspension an deren Feinkornpartikel erfolgt, von denen es durch die kavitative Beeinflussung zuvor getrennt wurde.

Es ist somit Aufgabe der vorliegenden Erfindung, ein Verfahren der eingangs genannten Art zu schaffen, mit dem eine Trennung mineralischer. Anteile von Böden, Sedimenten, Schlicken und Schlämmen auf sehr effektive Weise möglich ist, so daß nach Abschluß des erfindungsgemäßen Verfahrens anfallende Mengen von Restbestandteilen, die nicht weiter verwertet werden können, derart gering sind, daß sie praktisch vernachlässigbar klein sind oder aber einer chemischen. Umsetzung zu ihrer Neutralisierung zugeführt werden können, bei der der größte Anteil einer Wiederverwertung zugeführt werden kann, ohne daß umweltbelastende Probleme auftreten, daß das Verfahren unter verhältnismäßig geringem apparativen Aufwand durchführbar ist und einfach und kostengünstig durchgeführt werden kann.

Gelöst wird die Aufgabe gemäß der Erfindung dadurch, daß der Schluffanteil im wesentlichen gleichzeitig einer durch einen gezielt eingestellten Druckabfall erzeugten kavitativen und einer oxidativen Beeinflussung unterzogen wird.

Der Vorteil des erfindungsgemäßen Verfahrens liegt in der für den Trennvorgang sehr effektiven Kombination der an sich jeweils bekannten Kavitation sowie der Oxidation, wobei das Verfahren mit sehr geringem Aufwand an sich in jede bekannte Boden- oder Sedimentreinigungsanlage als Vorbehandlungsstufe integriert werden kann und wobei bei bestehenden Feinkornreinigungsanlagen die Erfindung auch als Nachreinigungsstufe zur Umwandlung von Schadstoffen in biologisch abbaubare Stoffe genutzt werden kann.

Es ist mit dem erfindungsgemäßen Verfahren somit nicht nur möglich, dieses in einer Neuanlage einzusetzen, vielmehr kann das Verfahren auch, wie gesagt, in schon bestehende Anlagen integriert werden, womit bisherige Anlagen dann ein Höchstmaß an wirklicher Trenneffektivität mit Endprodukten erzeugen, die, wie erfindungsgemäß angestrebt, einerseits unmittelbar wiederverwendet werden können, beispielsweise in der Bau- oder Zementindustrie, und andererseits beispielsweise die organischen Verbindungen, die mit dem erfindungsgemäßen Verfahren in sehr reiner Form anfallen, entweder ebenfalls einer Verwendung zugeführt werden können oder aber durch chemische Umwandlung, beispielsweise Verbrennung, einer endgültigen Umwandlung zugeführt werden. Bei dieser endgültigen Umwandlung in Form der Verbrennung können diese beispielsweise noch als Energielieferant Verwendung finden. Der erfindungsgemäß möglicherweise noch anfallende Rest an nicht mehr umwandelbaren organischen und/oder schwermetallischen Bestandteilen ist so gering, daß forderungsgemäß der Bedarf für Deponiervolumen drastisch reduziert wird.

Grundsätzlich ist es möglich, die kavitative Beeinflussung des Schluffmaterials mittels beliebiger geeigneter Energiequellen zu bewirken. Es hat sich aber als vorteilhaft in Versuchen herausgestellt, die kavitative Beeinflussung mittels Ultraschall erzeugen zu lassen. Denkbar ist vorzugsweise aber auch, die kavitative Beeinflussung durch einen gezielt eingestellten Druckabfall erfolgen zu lassen. Untersuchungen haben ergeben, daß durch die Implosion der bei der Kavitation entstehenden Dampfblasen in einem Trägerfluid erhebliche Energien freigesetzt werden können, die zu einem Reinigen der Oberflächen der partikelförmigen Schluffanteile führen.

Auch die oxidative Beeinflussung des Schluffanteiles kann an sich auf beliebige geeignete Weise erfolgen. Als vorteilhaft hat es sich aber herausgestellt, die oxidative Beeinflussung beispielsweise mittels Wasserperoxid erfolgen zu lassen oder vorzugsweise mittels der Zugabe von Ozon. Ozon bzw. Wasserstoffperoxid sind bekannterweise starke Oxida-tionsmittel, so daß die Rückadsorption des kavitativ vorbehandelten Schluffmittels durch das voraufgeführte Oxidationsmittel verhindert wird, wobei beispielsweise die oxidative Beeinflussung mittels mit wasserstoffperoxidangereichertem Wasser vorzugsweise erfolgen kann.

Es ist aber auch vorteilhafterweise möglich, die oxidative Beeinflussung lediglich mittels der Zufuhr von Sauerstoff erfolgen zu lassen, wobei der Sauerstoff beispielsweise in Form eines sauerstoffangereicherten Mediums zugeführt werden kann.

Schließlich ist es vorzugsweise möglich, ein Tensid und/oder wenigstens. ein Bioöl dem Schluffanteil bei der kavitativen und oxidativen Behandlung zuzugeben, d.h. im gleichen Verfahrensschritt, in dem die kavitative und oxidative Beeinflussung des Schluffmittels vorgenommen wird. Die Zugabe von biologisch abbaubarem Öl oder Tensiden führt zu einer Verschiebung des Lösungsgleichgewichtes in Richtung Wasser bzw. zur Organik. Dadurch ist, wie angestrebt, der Schluffanteil sehr viel einfacher und effektiver trennbar.

Gemäß einer weiteren vorteilhaften Ausgestaltung des Verfahrens wird der Schluffanteil nach der kavitativen und oxidativen Behandlung einem Reaktor zur Wärmebehandlung zugeführt. Die Verweilzeit des Schluffanteils und/oder die Reaktionstemperatur im Reaktor sind vorzugsweise einstellbar, so daß mittels der Behandlung des Schluffanteils im Reaktor als nachgeschalteter Nachreinigungsstufe eine optimierte Anpassung an das jeweilige Schluffgemisch bzw. die Zusammensetzung des Schluffanteils möglich ist.

Der Schluffanteil kann dann vorzugsweise nach der kavitativen und oxidativen Behandlung und ggf. nach vorteilhafterweise nachfolgend zwischengeschaltetem Reaktor einer ersten Trenneinrichtung, beispielsweise einem Zyklon, zugeführt werden, in der sie in einen gereinigten mineralischen Schluffanteil und einen mit Schwermetallen und/oder Schwermetallverbindungen und/oder organischen Verbindungen angereicherten Schluffanteil getrennt wird.

Auch ist es schließlich vorteilhafterweise möglich, den Schluffanteil nach der kavitativen und oxidativen Behandlung einer zweiten Trenneinrichtung zuzuführen, wobei die die Trenneinrichtung verlassende, von organischen Verbindungen abgereicherte wäßrige Phase des Schluffanteils abgeführt wird, während die die Trenneinrichtung verlassende, mit organischen Verbindungen angereicherte Phase einer Extraktionseinrichtung zugeführt wird, d.h. einem Eindicker, wobei die die Extraktionseinrichtung verlassende angereicherte organische Phase beispielsweise einer Verbrennung zugeführt wird. Die dabei entstehende Wärme kann für für den Gesamtprozeß benötigte Wärme ausgenutzt werden, oder aber die angereicherte organische Fraktion selbst wird wieder so weit zerlegt, daß ihre Bestandteile einer erneuten Nutzung zugeführt werden können. Das während des Eindickungsvorgangs in der Extraktionseinrichtung anfallende Wasser wird wiederum als gereinigtes Kreislaufwasser der primären Bodenwäsche zugeführt, in der der kontaminierte Boden, das Sediment, der Schlick, der Schlamm und dergleichen in eine gereinigte Sandfraktion und den kontaminierten Schluffanteil, der verfahrensgemäß gereinigt wird, getrennt wird.

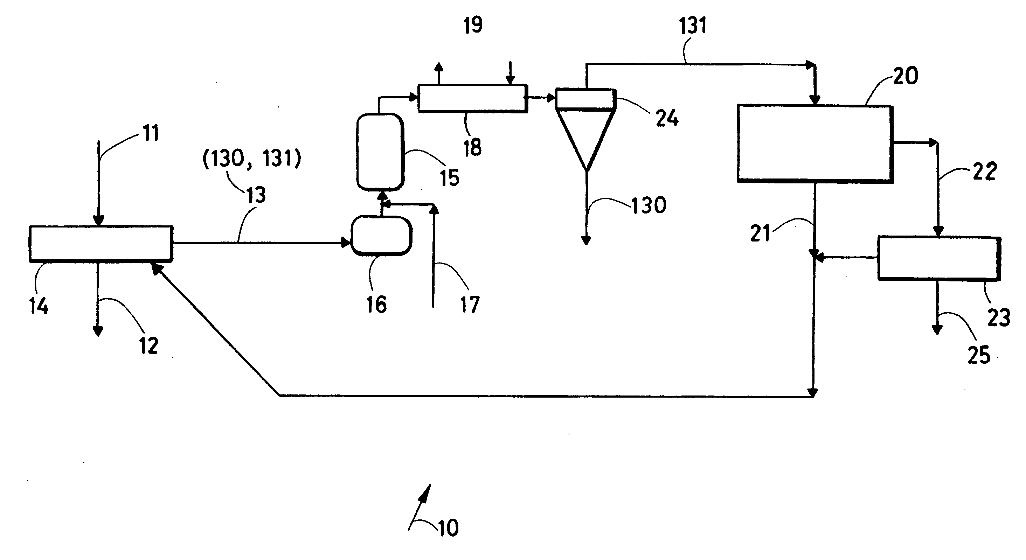

Die Erfindung wird nun unter Bezugnahme auf die einzige Zeichnung anhand eines Ausführungsbeispiels beschrieben. Diese zeigt
in Form eines Blockschaltbildes eine Anordnung, mit der das Verfahren zur Reinigung kontaminierter Böden, Sedimente, Schlicke, Schlämme und dergleichen ausgeführt werden kann.

Mittels der Anordnung 10 kann das Verfahren zur Reinigung kontaminierter Böden, Sedimente, Schlicke, Schlämme und dergleichen, im folgenden kurz Boden 11 genannt, ausgeführt werden. Bei dem Boden 11 handelt es sich um ein Gemisch mit wenigstens einer Sandfraktion 12 und einer Feinkornfraktion 13, wobei die Feinkornfraktion 13 einen partikelförmigen organischen Schluffanteil 131 enthält, auf dem insbesondere Kontaminanten aus Schwermetallen und organischen Verbindungen haften, und einen mineralischen Schluffanteil 130. Der kontaminierte Schluffanteil 131 soll vom mineralischen Schluffanteil 130 getrennt werden.

Dazu wird der Boden 11 zunächst zur Ausführung einer konventionellen Bodenwäsche auf eine Bodenwascheinrichtung 14 bekannter Bauweise geführt. Der Boden 11 verläßt die Bodenwascheinrichtung 14 in Form einer gereinigten Sandfraktion 12 und einer kontaminierten Schlufffraktion bzw. Feinkornfraktion 13, die ein Gemisch aus mineralischem Schluffanteil 130 und einen mit Schwermetallen und/oder Schwermetallverbindungen und/oder organischen Verbindungen angereicherten Schluffanteil 131 umfaßt. Die Feinkornfraktion bzw. kontaminierte Schlufffraktion 13 enthält Wasser, so daß diese mittels einer Pumpe 16 in eine Kavitationseinrichtung bzw. Kavitationsstrecke 15 gepumpt werden kann. Mittels eines Rohrsegmentes von ca. 30 cm Länge, hier nicht dargestellt, wird beispielsweise durch Druckabfall Kavitation erzeugt und in die Kavitationseinrichtung 15 geleitet. Gleichzeitig wird über die Oxidationsmittelzugabe 17 Oxidationsmittel zudosiert. Dabei kann z.B. direkt ozonangereichertes Wasser der in der Kavitationseinrichtung 15 befindlichen, mittels der Pumpe 16 zugeführten, zu trennenden Feinkornfraktion 13 zugeführt werden. Es ist aber auch möglich, die Feinkornfraktion 13 vor der Kavitationszone mit einem ozonangereicherten Wasserstrom zu vermischen.

Als Oxidationsmittel kann aber auch Sauerstoff oder Wasserstoffperoxid zugegeben werden. Auch ist es möglich, gleichzeitig biologisch abbaubares Öl und/oder Tenside der Feinkornfraktion 13 in der Kavitationseinrichtung 5 gleichzeitig mit der oxidativen und der kavitativen Behandlung zuzugeben.

In der Kavitationseinrichtung 15 wird durch die Implosion der Kavitationsblasen die Oberfläche der mineralischen Partikel teilweise oder ganz von anhaftenden organischen Bestandteilen befreit. In der hochenergiereichen Kavitationszone finden chemische Umsetzungen statt und das zugeführte Oxidationsmittel oxydiert Kohlenwasserstoffverbindungen, wodurch die Affinität zum umgebenden Wasser und damit deren Löslichkeit vergrößert wird.

Durch die Oxidation und die chemischen Crackprozesse der Kavitation ergibt sich ein erleichterter Übergang der Kontaminanten in die Wasserphase bzw. eine verminderte Affinität zum mineralischen Anteil der Schlufffraktion. Die die Kavitationseinrichtung 15 verlassende Feinkornfraktion 13 ist somit derart aufbereitet, daß nachfolgend eine erhebliche Erleichterung der Abtrennung der Kontaminanten durch nachgeschaltete Trennprozesse möglich ist.

Zunächst wird die derart aufbereitete Feinkornfraktion 13 in einen Reaktor 18, beispielsweise in Form eines Rohrreaktors, gegeben, in dem durch Zufuhr von Energie 19 eine Temperaturbehandlung bei einstellbarer Temperatur und einstellbarer Verweilzeit im Reaktor möglich ist, wodurch die nachherige Abtrennung der Kontaminanten noch leichter möglich ist. Die derart wärmebehandelte Feinkornfraktion 13 wird dann auf eine erste Trenneinrichtung 24, beispielsweise in Form eines Zyklons geführt, in dem Wasser, Kohlenwasserstoffe und tonhaltige Partikel bzw. allgemein mit Schwermetallen und/oder Schwermetallverbindungen und/oder organischen Verbindungen angereicherter Schluffanteil 131 als sogenannter Oberlauf abgetrennt wird und das Zyklon verläßt, wohingegen der gereinigte mineralische Schluffanteil 130 als sogenannter Unterlauf das Zyklon verläßt. Der gereinigte mineralische Schluffanteil 130 kann weiterverwertet werden.

Der mit Schwermetallen und/oder Schwermetallverbindungen und/oder organischen Verbindungen angereicherte Schluffanteil wird einer zweiten Trenneinrichtung 20, beispielsweise in Form einer Wasseraufbereitung, zugeführt. Die die Trenneinrichtung 20 verlassende, von organischen und/oder ggf. auch schwermetallischen Verbindungen abgereicherte wäßrige Phase 21 wird als anfallendes Kreislaufwasser der Bodenwascheinrichtung 14 zugeführt, wohingegen die die Trenneinrichtung 20 verlassende, mit organischen und/oder ggf. schwermetallischen Verbindungen angereicherte Phase 22 einer Extraktionseinrichtung 23 (Eindicker) zugeführt wird. Die die Extraktionseinrichtung 23 verlassende organisch angereicherte Fraktion 25 kann beispielsweise zur Verbrennung geführt werden, wobei die dabei entstehende Wärme als Prozeßwärme beispielsweise dem Reaktor zugeführt werden kann. Je nach Zusammensetzung der organisch angereicherten Fraktion ist auch eine Aufspaltung und Wiederverwednung der Bestandteile möglich.

Das die Extraktionseinrichtung 23 verlassende Wasser kann ebenfalls als gereinigtes Kreislaufwasser wiederum der Bodenwascheinrichtung 14 zugeführt werden. Es ist im übrigen auch möglich, die nach der kavitativen und oxidativen Behandlung die Kavitationseinrichtung 15 verlassende Feinkornfraktion 13 zunächst einem Flotationsverfahren und/oder einem Extraktionsverfahren zuzuführen (nicht dargestellt), und zwar zusätzlich oder alternativ zu den nachgeschalteten ersten und zweiten Trenneinrichtungen 24, 20. Schließlich ist es auch möglich, das die zweite Trenneinrichtung 20 verlassende Abwasser, bevor es erneut als Waschwasser der Bodenwascheinrichtung 14 zugeführt wird, durch Ultrafiltration und/oder Flotation (nicht dargestellt) zu reinigen.

### Bezugszeichenliste

- 10: Anordnung
- 11: Boden
- 12: Sandfraktion
- 13: Feinkornfraktion
- 130: mineralischer Schluffanteil
- 131: mit Schwermetallen und/oder Schwermetallverbindungen und/oder organischen Verbindungen angereicherter Schluffanteil
- 14: Bodenwascheinrichtung
- 15: Kontaminationseinrichtung/-strecke
- 16: Pumpe
- 17: Oxidationsmittelzugabe/Oxidationsmittel
- 18: Reaktor
- 19: Energiezufuhr/-abfuhr
- 20: zweite Trenneinrichtung/Wasseraufbereitung
- 21: von organischen und/oder schwermetallischen Verbindungen abgereicherte wässrige Phase
- 22: mit organischen und/oder schwermetallischen Verbindungen angereicherte Phase
- 23: Extraktionseinrichtung (Eindicker)
- 24: erste Trenneinrichtung
- 25: angereicherte organische Fraktion

## Patentansprüche

1. Verfahren zum Reinigen kontaminierter Böden, Sedimenten, Schlick, Schlämmen und dergleichen, die wenigstens eine Sandfraktion und eine Feinkornfraktion umfassen, wobei die Feinkornfraktion einen partikelförmigen organischen Schluffanteil enthält, an dem insbesondere Kontaminanten aus Schwermetallen und organischen Verbindungen haften und die einen mineralischen Schluffanteil enthält und wobei der kontaminierte Schluffanteil vom mineralischen Schluffanteil getrennt werden soll, und der Schluffanteil 1 im wesentlichen gleichzeitig einer kavitativen und einer oxidativen Beeinflussung unterzogen wird ,
**dadurch gekennzeichnet, daß** die kavitative Beeinflussung nicht durch Ultraschall, sondern durch einen gezielt eingestellten Druckabfall erzeugt wird.

2. Verfahren nach Anspruch 1, **dadurch gekennzeichnet, daß** die oxidative Beeinflussung mittels Wasserstoffperoxid erfolgt.

3. Verfahren nach einem oder beiden der Ansprüche 1 oder 3, **dadurch gekennzeichnet, daß** die oxidative Beeinflussung mittels Ozon erfolgt.

4. Verfahren nach einem oder mehreren der Ansprüche 1 bis 3, **dadurch gekennzeichnet, daß** die oxidative Beeinflussung mittels Sauerstoff erfolgt.

5. Verfahren nach Anspruch 4, **dadurch gekennzeichnet, daß** der Sauerstoff in Form eines sauerstoffangereicherten Mediums zugeführt wird.

6. Verfahren nach einem oder mehreren der Ansprüche 1 bis 5, **dadurch gekennzeichnet, daß** wenigstens ein Tensid und/oder ein biologisch abbaubares Öl dem Schluffanteil bei der kavitativen und oxidativen Behandlung zugegeben werden.

7. Verfahren nach einem oder mehreren der Ansprüche 1 bis 6, **dadurch gekennzeichnet, daß** der Schluffanteil nach der kavitativen und oxidativen Behandlung einem Reaktor zur Wärmebehandlung zugeführt wird.

8. Verfahren nach Anspruch 7, **dadurch gekennzeichnet, daß** die Verweilzeit des Schluffanteils und/oder die Reaktionstemperatur im Reaktor einstellbar sind bzw. ist.

9. Verfahren nach einem oder mehreren der Ansprüche 1 bis 8, **dadurch gekennzeichnet, daß** der Schluffanteil nach der kavitativen und oxidativen Behandlung einer zweiten Trenneinrichtung zugeführt wird, wobei die die Trenneinrichtung verlassende, von organischen Verbindungen abgereicherte wäßrige Phase des Schluffanteils abgeführt wird, während die die Trenneinrichtung verlassende, mit organischen Verbindungen angereicherte Phase einer Extraktionseinrichtung zugeführt wird.

10. Verfahren nach Anspruch 9, **dadurch gekennzeichnet, daß** der Schluffanteil nach der kavitativen und oxidativen Behandlung vor Zuleitung zur zweiten Trenneinrichtung einer ersten Trenneinrichtung zugeführt wird, in der sie in einen gereinigten mineralischen Schluffanteil und eine mit Schwermetallen und/oder Schwermetallverbindungen und/oder organischen Verbindungen angereicherten Schluffanteil getrennt wird.

## Claims

1. Method for purifying contaminated soils, sediments, mud, sludges and the like that comprise at least one sand fraction and one fine-grain fraction, whereby the fine-grain fraction contains one portion of particulate organic silt to which adhere in particular contaminants consisting of heavy metals and organic compounds and which contains one portion of mineral silt, and whereby the contaminated silt portion is to be separated from the mineral silt portion, and the silt portion is subjected essentially simultaneously to a cavitative and an oxidative influence, **characterized in that** the cavitative influence is generated not by ultrasound but by a specifically adjusted pressure drop.

2. Method according to Claim 1, **characterized in that** the oxidative influence takes place by means of hydrogen peroxide.

3. Method according to one or both of the Claims 1 or 2, **characterized in that** the oxidative influence takes place by means of ozone.

4. Method according to one or more of the Claims 1 to 3, **characterized in that** the oxidative influence takes place by means of oxygen.

5. Method according to Claim 4, **characterized in that** the oxygen is supplied in the form of an oxygen-enriched medium.

6. Method according to one or more of the Claims 1 to 5, **characterized in that** at least one surfactant and/or a biodegradable oil are added to the silt portion during the cavitative and oxidative treatment.

7. Method according to one or more.of the Claims 1 to 6, **characterized in that**, after the cavitative and oxidative treatment, the silt portion is conveyed to a reactor for heat treatment.

8. Method according to Claim 7, **characterized in that** the residence time of the silt portion and/or the reaction temperature in the reactor is/are adjustable.

9. Method according to one or more of the Claims 1 to 8, **characterized in that**, after the cavitative and oxidative treatment, the silt portion is conveyed to a second separation device, whereby the aqueous phase of the silt portion leaving the separation device and depleted in organic compounds is removed, while the phase leaving the separation device enriched with organic compounds is conveyed to an extraction device.

10. Method according to Claim 9, **characterized in that**, after the cavitative and oxidative treatment and before being conveyed to the second separation device, the silt portion is conveyed to a first separation device in which it is separated into a purified mineral silt portion and a silt portion enriched with heavy metals and/or heavy metal compounds and/or organic compounds.

## Revendications

1. Procédé d'épuration de sols, de sédiments, de vase, de boues et similaires contaminés, qui comprennent au moins une fraction de sable et une fraction de granulométrie fine, la fraction de granulométrie fine comprenant une partie d'ardoise grosse organique sous forme de particules, à laquelle partie adhèrent en particulier des polluants constitués de métaux lourds et de composés organiques, et qui contient une partie d'ardoise grosse minérale, la partie contaminée de l'ardoise grosse devant être séparée de la partie d'ardoise grosse minérale, et la partie d'ardoise grosse est soumise à peu près en même temps à une influence par cavitation et à une influence par oxydation, **caractérisé en ce que** l'influence de cavitation n'est pas provoquée par des ultrasons, mais par une chute de pression réglée systématiquement.

2. Procédé selon la revendication 1, **caractérisé en ce que** l'influence par oxydation est effectuée par de l'eau oxygénée.

3. Procédé selon une ou plusieurs des revendications 1 et 2, **caractérisé en ce que** l'influence par oxydation est effectuée par de l'ozone.

4. Procédé selon une ou plusieurs des revendications 1 à 3, **caractérisé en ce que** l'influence par oxydation est effectuée par de l'oxygène.

5. Procédé selon la revendication 4, **caractérisé en ce que** l'oxygène est amené sous forme d'un milieu enrichi en oxygène.

6. Procédé selon une ou plusieurs des revendications 1 à 5, **caractérisé en ce qu'**au moins un corps tensioactif et / ou une huile biodégradable sont ajoutés à la partie d'ardoise grosse lors du traitement par cavitation et par oxydation.

7. Procédé selon une ou plusieurs des revendications 1 à 6, **caractérisé en ce qu'**après le traitement par cavitation et par oxydation, la partie d'ardoise grosse est amenée dans un réacteur en vue d'un traitement thermique.

8. Procédé selon la revendication 7, **caractérisé en ce que** le temps de séjour de la partie d'ardoise grosse et / ou la température de réaction dans le réacteur sont réglables.

9. Procédé selon une ou plusieurs des revendications 1 à 8, **caractérisé en ce qu'**après le traitement par cavitation et par oxydation, la partie d'ardoise grosse est amenée dans un deuxième dispositif de séparation, moyennant .quoi la phase aqueuse de la partie d'ardoise grosse quittant le dispositif de séparation et appauvrie en substances organiques est évacuée, tandis que la phase enrichie en substances organiques et quittant le dispositif de séparation est amenée à une installation d'extraction.

10. Procédé selon la revendication 9, **caractérisé en ce qu'**après le traitement par oxydation et par cavitation et avant l'envoi à la deuxième installation de séparation, la partie d'ardoise grosse est amenée à une première installation de séparation, dans laquelle elle est séparée en une partie d'ardoise grosse minérale dépolluée et une partie d'ardoise grosse enrichie en métaux lourds et / ou en composés de métaux lourds et / ou en composés organiques.
